# EUROPEAN PATENT SPECIFICATION

(11) **EP 3 348 470 B1**
(45) Date of publication and mention of the grant of the patent: **06.03.2019**
(21) Application number: 17151606.5
(22) Date of filing: 16.01.2017
(51) Int. Cl.: B64C 1/26, B64C 1/36, B64C 21/00, B64D 27/02

(54) **AIRPLANE OR VEHICLE WITH CONFIGURATION OF A T JUNCTION OF A FLOW OBSTACLE ON A WALL BOUNDING A FLOW**
FLUGZEUG ODER FAHRZEUG MIT KONFIGURATION EINER T-VERBINDUNG EINES STRÖMUNGSHINDERNISSES AN EINER WAND ZUR BEGRENZUNG EINER STRÖMUNG
AÉRONEF OU VÉHICULE AVEC CONFIGURATION DE RACCORD EN T D'UN OBSTACLE À L'ÉCOULEMENT D'UN FLUX SUR UNE PAROI

(43) Date of publication of application: 18.07.2018
(73) Proprietor: Deutsches Zentrum für Luft- und Raumfahrt e.V., 51147 Köln (DE)
(72) Inventor: Eitelberg, Georg, 8325 HG Vollenhove (NL); Dwight, Richard, 2611 LV Delft (NL); Belligoli, Zeno, 2611 JA Delft (NL)
(74) Representative: REHBERG HÜPPE + PARTNER

(56) References cited:
- EP-A1- 0 080 251
- EP-A1- 2 468 210
- WO-A1-2013/137915
- WO-A2-2004/043780
- US-A- 2 927 749
- US-A- 3 220 006
- Anonymous: "Francesco Lana de Terzi - Wikipedia", , 8 May 2010 (2010-05-08), XP055382386, Retrieved from the Internet: URL:https://en.wikipedia.org/w/index.php?t itle=Francesco_Lana_de_Terzi&oldid=3608752 47 [retrieved on 2017-06-16]

## Description

### TECHNICAL FIELD OF THE INVENTION

The present invention relates to an airplane or a vehicle having a T junction of a flow obstacle on a wall bounding a flow, the flow having a main flow direction. Particularly, the present invention relates to a T junction comprising a concavity of the wall neighboring the flow obstacle, the concavity terminating at a first distance downstream the flow obstacle.

The flow obstacle may, for example, be a wing attached to a fuselage of an airplane, the wall bounding the flow being the wall of the airplane.

### PRIOR ART

J. Brezillon and R.P. Dwight: Aerodynamic Shape Optimization Using the Discrete Adjoint of the Navier-Strokes Equations: Applications towards Complex 3D Configurations, see https:\\ aerodynamics.lr.tudelft.nl/~rdwight/pub/BreDwi2009.pdf, disclose results of a fuselage drag-minimization optimization. These results include an optimization of the fuselage shape at the wing-body intersection of an airplane, with parts of the flow bounding wall going into the fuselage. These parts start downstream the leading edge of the wing, extend along the upper side of the wing and terminate behind the trailing edge of the wing.

US 2009/0078830 A1 discloses an aircraft including a fuselage and two wings to which engine nacelles are attached and that are each connected laterally to the fuselage on each side thereof by a central fairing. The central fairing includes, facing each wing, two opposed surfaces connected one to a suction face side and the other to a pressure face side of the wing and that extend longitudinally along the fuselage. At least one of the two surfaces include at least one local geometric deformation configured to generate lateral aerodynamic disturbances on the central fairing towards the wing to control the flow of air over the wing. These geometric deformations have a form of a local concavity or hollow extending primarily in the longitudinal direction of the fuselage and secondarily in a direction perpendicular thereto. By means of this geometric deformation, lateral perturbations are created that propagate from the central fairing towards the wing tip and have the form of compression waves of the flow, initiating a weak shock. The pressure waves are generated to make it possible to reorganize the pressure field over the wing structure at a distance, particularly after replacing the existing engines of the airplane by larger engines resulting in some degradation of the aerodynamic performances of the remotorized airplane.

US patent 6,149,101 discloses a wing in combination with a fuselage having a body which is elongated in the direction of flight. The body has an indentation proximate the wing. The body indentation is adapted to a wing thickening in the direction of flight to minimize a variation of the combined volume of the body and the wing in the direction of flight to reduce a combined volume wave drag.

WO 2004/043780 A2 discloses an aircraft comprising wings and a fuselage. The wings have camber at or near the wing leading edges which have blunted sharpness and low sweep angles. The fuselage has indentations along the wing sides thereof, and lengthwise of the fuselage. The wings at each side of the fuselage have a root length which subtends said indentation at said side. The indentations start at a location proximate the inboard ends of the wing leading edges and terminate behind nacelles of jet engines located near the inboard ends of the wing trailing edges and forward of the tail of the fuselage.

US 2,927,749 A1 discloses an airfoil construction for an aircraft having a fuselage and a pair of wings extending outwardly therefrom. This construction comprises a fairing member secured over the joinder of the top surface of each wing with the fuselage of the aircraft. The fairing member extends outwardly of the leading edge of the wing thence turning downwardly and rearwardly merging with the undersurface of the wing immediately behind its leading edge. The fairing member has its opposed sides substantially merging with the adjacent surface of the wing and fuselage. The portion of the fairing extending along the top surface of the wing constitutes a generally arcuate surface of concave shape in transverse section, and the portion of the fairing member extending forwardly of the leading edge of the wing presenting a round leading edge portion which is angled forwardly from the leading edge of the wing and in an upward direction, towards the fuselage. The arcuate shaped surface of the fairing member extending along the top surface of the wing progressively shortens in radius in the direction of the forward rounded leading edge portion thereof.

WO 2013/137915 A1 discloses an airplane including a wing mounted mid-level on a tubular fuselage. The wing includes carry-through that passes transversely through the fuselage and divides a cabin deck into fore and aft sections. In cross section of the fuselage, an intersection area between upper and lower lobes of the fuselage is generally V-shaped. In order to improve the aerodynamics of the fuselage, a fairing may cover the intersection area, thereby forming a longitudinally extending, conduit-like recess. The intersections are located between a mid-level cabin deck and an upper level cabin deck which is stacked above the mid-level cabin deck, and they extend essentially over the entire length of the fuselage between fore and aft pressure bulkheads which permit pressurization of the mid-level cabin deck and the upper level cabin deck.

US 3,220,006 A discloses an antenna comprising an antenna body which is streamlined and tilted to provide a sweep-back to its mounting base. The base end of the antenna body is provided with a flared portion having the form of an external pressurized flange mounting. A skin of an aircraft is provided with a receiving opening to accommodate the base portion of the antenna permitting a flush installation wherein the surface of the antenna base is faired into the surface of the aircraft skin.

EP 0 080 251 A1 comprises a centrifugal air compressor having an angular airflow path of progressively increasing diameter and progressively diminishing cross-sectional area in which a plurality of internal compression-diffusion stages are provided. The stages of progressively greater diameter are defined by sets of impeller blades which alternate with sets of stator blades along the airflow path.

There still is a need of an airplane or a vehicle having a T junction of a flow obstacle on a wall bounding a flow which, when for example applied in an airplane at the T junctions of the wings on the fuselage, effectively reduces the additional drag due to this junction. The drag, for example of a wing/flat-plate configuration, is higher than the sum of the drag of the corresponding wing alone and the drag of the corresponding flat-plate alone.

### SUMMARY OF THE INVENTION

The present invention is defined in the annexed claims.

### DESCRIPTION OF THE INVENTION

The starting point of the present invention is a T junction of a flow obstacle on a wall bounding a flow, the flow having a main flow direction. The flow along the wall forms a boundary layer. When the boundary layer encounters the flow obstacle large enough to stop a part of the flow on the leading edge of the obstacle, an adverse pressure gradient is caused which results in a reversal and a separation of the flow. Due to the separation of the flow, the boundary layer rolls up and forms what is known as a horse shoe vortex. The horse shoe vortex is then convected downstream of the obstacle by the flow. As separated flow, the horse shoe vortex contributes to the drag with an additional component known as interference drag. This interference drag is a reason why, for example, the drag of a wing/flat-plate configuration is higher than the sum of the drag of the corresponding wing alone and of the drag of the corresponding flat-plate alone. To counteract the interference drag caused by the horse shoe vortex, the T junction according to the invention comprises a concavity of the wall neighboring the flow obstacle. This concavity starts at a distance upstream the flow obstacle in the main flow direction and terminates at a same or other distance downstream the flow obstacle in the main flow direction. In other words, the invention is a concave shape wall contour serving for passive drag-reduction. The concavity acts favorably on the flow in the T junction by decreasing the peak vorticity of the horse shoe vortex. The concavity accommodates the horse shoe vortex and offers a pocket to the horse shoe vortex in which it stabilizes. This leaves the flow outside the concavity undisturbed, thus lowering the drag of the obstacle in the vicinity of the T junction. The concavity effectively increases the boundary layer thickness and decreases the velocity of the flow outside the boundary layer. This, in turn, increases the horse shoe vortex size but lowers the viscous dissipation due to the horse shoe vortex. This reduces the transfer of streamwise momentum to the cross plane of the T junction. Downstream of the flow obstacle, at the end of the concavity, the flow is accelerated due to the concavity shape and the boundary layer gets thinner resulting in less momentum loss than a configuration without concavity. Further, the sides of the concavity create counter-rotating vortices whose sense of rotation is opposite to the rotation in the legs of the horse shoe vortex. The interaction of these additional vortices in the wake will also reduce the shear experienced by the horse shoe vortex and therefore also leads to reduced dissipation losses. Although the concavity extends beyond the actual intersection of the flow obstacle and the wall, the cavity is shaped in such way that it only influences the flow in the proximity of the T junction.

The concavity starts at a distance between 20 % and 80 % of a length of the obstacle in the main flow direction upstream of the obstacle leading edge. The concavity terminates at a distance between 50 % and 110 % of the length of the obstacle in the main flow direction downstream of an obstacle trailing edge. The optimum location and amplitude of the concavity will depend on the fluid dynamic or aerodynamic parameters of the T junction. These parameters are in particular the flow speed, the boundary layer thickness, and the parameters that relate to the junction geometry.

The length of the obstacle in the main flow direction is defined as that distance between the most upstream and the most downstream points of that part of the flow obstacle that is attached to the wall.

In at least one transversal direction with regard to the main flow direction, the concavity extends from the flow obstacle up to a distance between 50 % and 100 % of the length of the obstacle in the main flow direction. The optimum value of this distance will depend on the shape of the flow obstacle and the size of an disturbance of the flow created by the flow obstacle.

If the wall bounding the flow extends all around the flow obstacle - which may, for example, not be the case with a wing attached to the bottom or the top of the fuselage of an airplane -, the concavity may extend all around the flow obstacle. Then, the two sides of the cavity will create two counter-rotating vortices whose senses of rotation are opposite to the rotation in the legs of the horse shoe vortex.

The optimum depth of the concavity depends on the boundary layer thickness of the flow over the wall. Typically, a maximum depth of the cavity - which is the maximum depth displayed by the actual cavity - is in a range of 50 % to 200 % of the boundary layer thickness of the flow over the wall upstream the flow obstacle, where it is not yet affected by the flow obstacle.

In transversal direction with regard to the main flow direction the concavity may comprise two overlapping partial concavities both extending along the main flow direction, each on one side of the obstacle. A longitudinal ridge may be formed between the overlapping partial concavities. Alternatively, the concavity may be a single concavity not subdivided by any ridges.

A circumference of the concavity in the wall may essentially be a rectangular with rounded edges. This particularly applies to a flow obstacle elongated in the main flow direction. A length of such an elongated flow obstacle in the main flow direction may be at least twice a thickness of the flow obstacle transversal to the main flow direction. The elongation factor of such an elongated flow obstacle may also be much higher than 2. The flow obstacle may however also have any other cross-sectional shape. For example, it may be a cylinder.

In an airplane comprising a fuselage and two wings attached to the fuselage, each wing meeting with a wall of the fuselage may form a T junction according to the present invention. Here, the T junction according to the present invention may also be designated as an anti-fairing. Alternatively or additionally, any engine pylon attached to a wing or the fuselage of the airplane and meeting with the wall of the fuselage or the wing may form a T junction according to the present invention. Even further, any sensor or antenna attached to a wing or the fuselage of the airplane and meeting with the wall of the fuselage or the wing may form a T junction according to the present invention.

In any other vehicle comprising a sensor or antenna attached to a body of the vehicle, the sensor or antenna meeting with a wall of the body may also form a T junction according to the present invention.

The concavity according to the present invention is designed for subsonic flow conditions. It may be assumed, however, that the working mechanism will also be effective at transonic flow conditions.

### BRIEF DESCRIPTION OF THE DRAWINGS

In the following, the invention is further explained and described with respect to preferred exemplary embodiments illustrated in the drawings.
- **Fig. 1**: is a lateral or transversal view on a T junction according to the present invention.
- **Fig. 2**: is a top view on the T junction according to the present invention.
- **Fig. 3**: is an upstream front view of the T junction according to the present invention.
- **Fig. 4**: is a perspective front view of the T junction according to the present invention.

### DESCRIPTION OF THE DRAWINGS

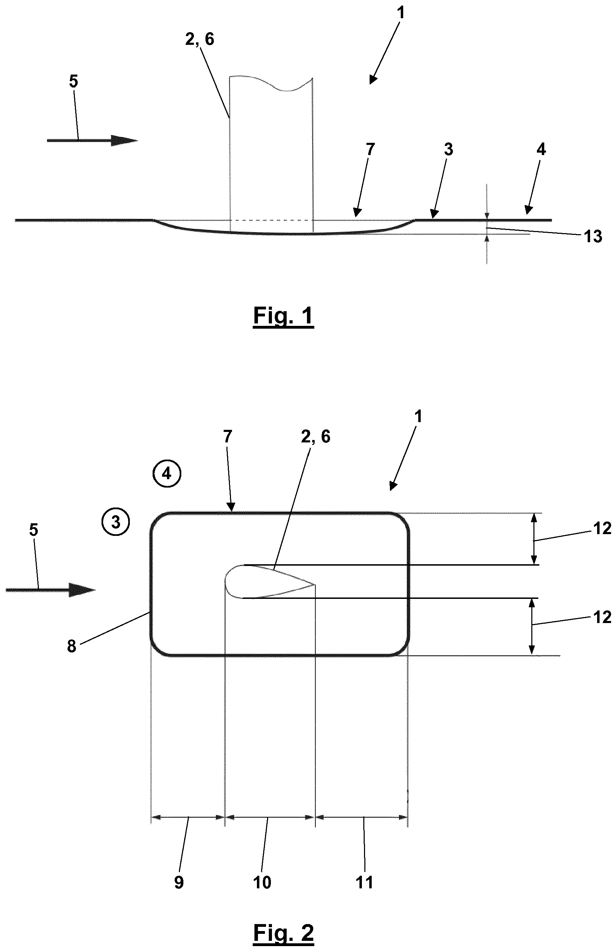

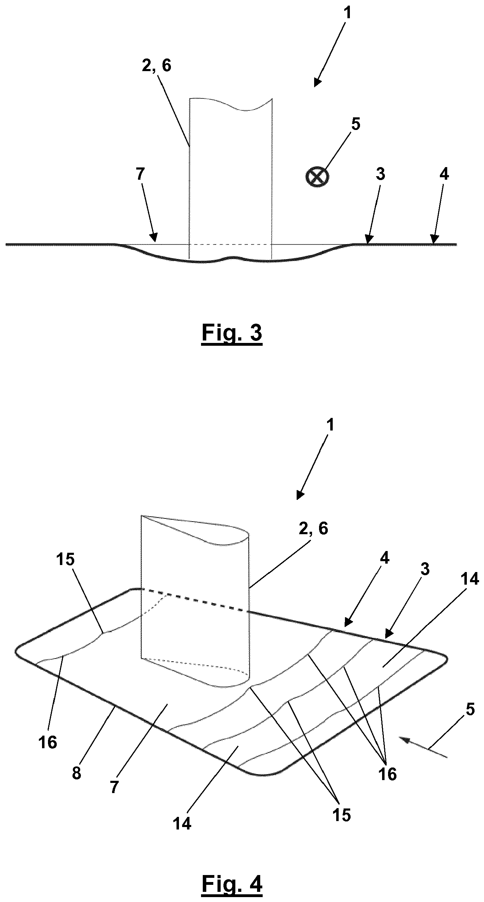

The T junction 1 schematically depicted in **Figs. 1 to 4** may be the junction of a wing 2 on a wall 3 of a fuselage 4 of an airplane. The wall 3 bounds a flow having a main flow direction 5, to which the wing 2 is a flow obstacle 6. To reduce a so-called interference drag which occurs in addition to the sum of the drags of the wall 3 and the wing 2, the wall 3 is provided with a concavity 7. The concavity 7 extends all around the flow obstacle 6. A circumference 8 of the concavity 7 essentially is a rectangular with rounded edges. Upstream of the flow obstacle 6, the concavity 7 starts at a distance 9. This distance 9 is in a range of 20 % to 80 % of a length 10 of the flow obstacle 6 in the main flow direction 5. Downstream the flow obstacle 6, the concavity 7 terminates at a distance 11 which is in a range of 50 % to 110 % of the length 10. On both sides of the flow obstacle 6 the concavity 7 laterally extends over distances 12. Although the distances 12 are equal in the figures, they may be different when the flow obstacle 6 is asymmetric, for example. A maximum depth 13 of the concavity 7 is in a range of 50 % to 200 % of a boundary layer thickness of the flow before the boundary layer of the flow is affected by the flow obstacle 6. The concavity 7 may comprise two overlapping partial concavities 14 separated by a ridge 15 as illustrated by contour lines 16 in Fig. 4.

### LIST OF REFERENCE NUMERALS

- 1: T junction
- 2: wing
- 3: wall
- 4: fuselage
- 5: main flow direction
- 6: flow obstacle
- 7: concavity
- 8: circumference
- 9: (second) distance
- 10: length
- 11: (first) distance
- 12: (third) distance
- 13: maximum depth
- 14: partial concavity
- 15: ridge
- 16: contour line

## Claims

1. An airplane, the airplane comprising a fuselage (4) and two wings (2) attached to the fuselage (4),
- wherein each wing (2) meeting with a wall (3) of the fuselage (4) forms a T junction (1) comprising the wall (3), the wing (2) as a flow obstacle (6), and a main flow direction (5), the wall (3) being configured to bound a flow having the main flow direction (5),
- wherein the T junction (1) comprises a concavity (7) of the wall (3) neighboring the flow obstacle (6), the concavity (7) serving for passive drag-reduction under subsonic flow conditions,
- wherein the concavity (7) terminates at a first distance (11) downstream the flow obstacle (6) in the main flow direction (5),
- wherein the concavity (7) starts at a second distance (9) upstream the flow obstacle (6) in the main flow direction (5), and
- wherein the concavity (7) has a depth with regard to the wall (3) outside the concavity (7) and provides the wall (3) with a concave shape wall contour,
**characterized in**
- **that** the first distance (11) is in a range of 20 % to 80 % of a length (10) of the flow obstacle (6) in the main flow direction (5) and that the second distance (9) is in a range of 50 % to 110 % of the length (10) of the flow obstacle (6) in the main flow direction (5),
- **that** the concavity (7), in at least one transversal direction (5) with regard to the main flow direction (5), extends from the flow obstacle (6) up to a third distance (12), and
- **that** the third distance (12) is in a range of 50 % to 100 % of a length (10) of the flow obstacle (6) in the main flow direction (5).

2. An airplane, optionally according to claim 1, the airplane comprising an engine pylon attached to a wing (2) or a fuselage (4) of the airplane,
- wherein the engine pylon meeting with a wall (3) of the fuselage (4) or the wing (2) forms a T junction (1) comprising the wall (3), the engine pylon as a flow obstacle (6), and a main flow direction (5), the wall (3) being configured to bound a flow having the main flow direction (5),
- wherein the T junction (1) comprises a concavity (7) of the wall (3) neighboring the flow obstacle (6), the concavity (7) serving for passive drag-reduction under subsonic flow conditions,
- wherein the concavity (7) terminates at a first distance (11) downstream the flow obstacle (6) in the main flow direction (5),
- wherein the concavity (7) starts at a second distance (9) upstream the flow obstacle (6) in the main flow direction (5), and
- wherein the concavity (7) has a depth with regard to the wall (3) outside the concavity (7) and provides the wall (3) with a concave shape wall contour,
**characterized in**
- **that** the first distance (11) is in a range of 20 % to 80 % of a length (10) of the flow obstacle (6) in the main flow direction (5) and that the second distance (9) is in a range of 50 % to 110 % of the length (10) of the flow obstacle (6) in the main flow direction (5),
- **that** the concavity (7), in at least one transversal direction (5) with regard to the main flow direction (5), extends from the flow obstacle (6) up to a third distance (12), and
- **that** the third distance (12) is in a range of 50 % to 100 % of a length (10) of the flow obstacle (6) in the main flow direction (5).

3. An airplane, optionally according to claim 1 or 2, the airplane comprising a sensor or antenna attached to a wing (2) or a fuselage (4) of the airplane,
- wherein the sensor or antenna meeting with a wall (3) of the fuselage (4) or the wing (2) forms a T junction (1) comprising the wall (3), the sensor or antenna as a flow obstacle (6), and a main flow direction (5), the wall (3) being configured to bound a flow having the main flow direction (5),
- wherein the T junction (1) comprises a concavity (7) of the wall (3) neighboring the flow obstacle (6), the concavity (7) serving for passive drag-reduction under subsonic flow conditions,
- wherein the concavity (7) terminates at a first distance (11) downstream the flow obstacle (6) in the main flow direction (5),
- wherein the concavity (7) starts at a second distance (9) upstream the flow obstacle (6) in the main flow direction (5), and
- wherein the concavity (7) has a depth with regard to the wall (3) outside the concavity (7) and provides the wall (3) with a concave shape wall contour,
**characterized in**
- **that** the first distance (11) is in a range of 20 % to 80 % of a length (10) of the flow obstacle (6) in the main flow direction (5) and that the second distance (9) is in a range of 50 % to 110 % of the length (10) of the flow obstacle (6) in the main flow direction (5),
- **that** the concavity (7), in at least one transversal direction (5) with regard to the main flow direction (5), extends from the flow obstacle (6) up to a third distance (12), and
- **that** the third distance (12) is in a range of 50 % to 100 % of a length (10) of the flow obstacle (6) in the main flow direction (5).

4. A vehicle, the vehicle comprising a sensor or antenna attached to a body of the vehicle, -
- wherein the sensor or antenna meeting with a wall (3) of the body forms a T junction (1) comprising the wall (3), the sensor or antenna as a flow obstacle (6), and a main flow direction (5), the wall (3) being configured to bound a flow having the main flow direction (5),
- wherein the T junction (1) comprises a concavity (7) of the wall (3) neighboring the flow obstacle (6), the concavity (7) serving for passive drag-reduction under subsonic flow conditions,
- wherein the concavity (7) terminates at a first distance (11) downstream the flow obstacle (6) in the main flow direction (5),
- wherein the concavity (7) starts at a second distance (9) upstream the flow obstacle (6) in the main flow direction (5), and
- wherein the concavity (7) has a depth with regard to the wall (3) outside the concavity (7) and provides the wall (3) with a concave shape wall contour,
**characterized in**
- **that** the first distance (11) is in a range of 20 % to 80 % of a length (10) of the flow obstacle (6) in the main flow direction (5) and that the second distance (9) is in a range of 50 % to 110 % of the length (10) of the flow obstacle (6) in the main flow direction (5),
- **that** the concavity (7), in at least one transversal direction (5) with regard to the main flow direction (5), extends from the flow obstacle (6) up to a third distance (12), and
- **that** the third distance (12) is in a range of 50 % to 100 % of a length (10) of the flow obstacle (6) in the main flow direction (5).

5. The airplane or vehicle of any of the claims 1 to 4, **characterized in that** the length (10) of the flow obstacle (6) in the main flow direction (5) is that distance between the most upstream and the most downstream points of that part of the flow obstacle (6) that is attached to the wall (3).

6. The airplane or vehicle of any of the claims 1 to 5, **characterized in that** the concavity (7) extends all around the flow obstacle (6).

7. The airplane or vehicle of any of the claims 1 to 6, **characterized in that** the concavity (7) comprises two overlapping partial concavities (14) both extending along the main flow direction (5), the partial concavities (14) being separated by a ridge (15) of the wall (3) within the concavity (7), the ridge extending along the main flow direction (5).

8. The airplane or vehicle of any of the claims 1 to 7, **characterized in that** a circumference (8) of the concavity (7) is a rectangular with rounded edges.

9. The airplane or vehicle of any of the claims 1 to 8, **characterized in that** the flow obstacle (6) is elongated in the main flow direction (5).

10. The airplane or vehicle of claim 9, **characterized in that** a length (10) of the flow obstacle (6) in the main flow direction (5) is at least twice a thickness of the flow obstacle (6) transversal to the main flow direction (5).

11. A use of the airplane or vehicle of any of the claims 1 to 10, wherein the wall (3) bounds a flow having the main flow direction (5), **characterized in that** a maximum depth (13) of the concavity (7), with regard to the wall (3) upstream and downstream the concavity (7), is in a range of 50 % to 200 % of a boundary layer thickness of the flow over the wall (3) upstream the flow obstacle (6) and not yet affected by the flow obstacle (6).

## Patentansprüche

1. Flugzeug, wobei das Flugzeug einen Rumpf (4) und zwei an dem Rumpf (4) befestigte Flügel (2) aufweist,
- wobei jeder auf eine Wand (3) des Rumpfs (4) treffende Flügel (2) eine T-Verbindung (1) ausbildet, die die Wand (3), den Flügel (2) als Strömungshindernis (6) und eine Hauptströmungsrichtung (5) aufweist, wobei die Wand (3) konfiguriert ist, um eine Strömung mit der Hauptströmungsrichtung (5) zu begrenzen,
- wobei die T-Verbindung (1) eine dem Strömungshindernis (6) benachbarte Konkavität (7) der Wand (3) aufweist, wobei die Konkavität (7) zur passiven Widerstandsreduktion unter Unterschallströmungsbedingungen dient,
- wobei die Konkavität (7) in der Hauptströmungsrichtung (5) in einem ersten Abstand (11) stromab von dem Strömungshindernis (6) endet,
- wobei die Konkavität (7) in der Hauptströmungsrichtung (5) in einem zweiten Abstand (9) stromauf von dem Strömungshindernis (6) beginnt und
- wobei die Konkavität (7) bezüglich der Wand (3) außerhalb der Konkavität (7) eine Tiefe aufweist und die Wand (3) mit einer Wandkontur konkaver Form versieht,
**dadurch gekennzeichnet,**
- **dass** der erste Abstand (11) im Bereich vom 20 % bis 80 % einer Länge (10) des Strömungshindernisses (6) in der Hauptströmungsrichtung (5) liegt und dass der zweite Abstand (9) in einem Bereich von 50 % bis 110 % der Länge (10) des Strömungshindernisses (6) in der Hauptströmungsrichtung (5) liegt,
- **dass** sich die Konkavität (7) in mindestens einer Querrichtung (5) zu der Hauptströmungsrichtung (5) von dem Strömungshindernis (6) bis auf einen dritten Abstand (12) erstreckt und
- **dass** der dritte Abstand (12) in einem Bereich von 50 % bis 100 % einer Länge (10) des Strömungshindernisses (6) in der Hauptströmungsrichtung (5) liegt.

2. Flugzeug, optional nach Anspruch 1, wobei das Flugzeug einen Motorpylon befestigt an einem Flügel (2) oder einem Rumpf (4) des Flugzeugs aufweist,
- wobei der auf die Wand (3) des Rumpfs (4) oder des Flügels (2) treffende Motorpylon eine T-Verbindung (1) ausbildet, die die Wand (3), den Motorpylon als Strömungshindernis (6) und eine Hauptströmungsrichtung (5) aufweist, wobei die Wand (3) konfiguriert ist, um eine Strömung mit der Hauptströmungsrichtung (5) zu begrenzen,
- wobei die T-Verbindung (1) eine dem Strömungshindernis (6) benachbarte Konkavität (7) der Wand (3) aufweist, wobei die Konkavität (7) zur passiven Widerstandsreduktion unter Unterschallströmungsbedingungen dient,
- wobei die Konkavität (7) in der Hauptströmungsrichtung (5) in einem ersten Abstand (11) stromab von dem Strömungshindernis (6) endet,
- wobei die Konkavität (7) in der Hauptströmungsrichtung (5) in einem zweiten Abstand (9) stromauf von dem Strömungshindernis (6) beginnt und
- wobei die Konkavität (7) bezüglich der Wand (3) außerhalb der Konkavität (7) eine Tiefe aufweist und die Wand (3) mit einer Wandkontur konkaver Form versieht,
**dadurch gekennzeichnet,**
- **dass** der erste Abstand (11) im Bereich vom 20 % bis 80 % einer Länge (10) des Strömungshindernisses (6) in der Hauptströmungsrichtung (5) liegt und dass der zweite Abstand (9) in einem Bereich von 50 % bis 110 % der Länge (10) des Strömungshindernisses (6) in der Hauptströmungsrichtung (5) liegt,
- **dass** sich die Konkavität (7) in mindestens einer Querrichtung (5) zu der Hauptströmungsrichtung (5) von dem Strömungshindernis (6) bis auf einen dritten Abstand (12) erstreckt und
- **dass** der dritte Abstand (12) in einem Bereich von 50 % bis 100 % einer Länge (10) des Strömungshindernisses (6) in der Hauptströmungsrichtung (5) liegt.

3. Flugzeug, optional nach Anspruch 1 oder 2, wobei das Flugzeug einen Sensor oder eine Antenne befestigt an einem Flügel (2) oder einem Rumpf (4) des Flugzeugs aufweist,
- wobei der auf die Wand (3) des Rumpfs (4) oder des Flügels (2) auftreffende Sensor oder die auf die Wand (3) des Rumpfs (4) oder des Flügels (2) auftreffende Antenne eine T-Verbindung (1) ausbildet, die die Wand (3), den Sensor oder die Antenne als Strömungshindernis (6) und eine Hauptströmungsrichtung (5) aufweist, wobei die Wand (3) konfiguriert ist, um eine Strömung mit der Hauptströmungsrichtung (5) zu begrenzen,
- wobei die T-Verbindung (1) eine dem Strömungshindernis (6) benachbarte Konkavität (7) der Wand (3) aufweist, wobei die Konkavität (7) zur passiven Widerstandsreduktion unter Unterschallströmungsbedingungen dient,
- wobei die Konkavität (7) in der Hauptströmungsrichtung (5) in einem ersten Abstand (11) stromab von dem Strömungshindernis (6) endet,
- wobei die Konkavität (7) in der Hauptströmungsrichtung (5) in einem zweiten Abstand (9) stromauf von dem Strömungshindernis (6) beginnt und
- wobei die Konkavität (7) bezüglich der Wand (3) außerhalb der Konkavität (7) eine Tiefe aufweist und die Wand (3) mit einer Wandkontur konkaver Form versieht,
**dadurch gekennzeichnet,**
- **dass** der erste Abstand (11) im Bereich vom 20 % bis 80 % einer Länge (10) des Strömungshindernisses (6) in der Hauptströmungsrichtung (5) liegt und dass der zweite Abstand (9) in einem Bereich von 50 % bis 110 % der Länge (10) des Strömungshindernisses (6) in der Hauptströmungsrichtung (5) liegt,
- **dass** sich die Konkavität (7) in mindestens einer Querrichtung (5) zu der Hauptströmungsrichtung (5) von dem Strömungshindernis (6) bis auf einen dritten Abstand (12) erstreckt und
- **dass** der dritte Abstand (12) in einem Bereich von 50 % bis 100 % einer Länge (10) des Strömungshindernisses (6) in der Hauptströmungsrichtung (5) liegt.

4. Fahrzeug, wobei das Fahrzeug einen Sensor oder eine Antenne befestigt an einer Karosserie des Fahrzeugs aufweist,
- wobei der auf eine Wand (3) der Karosserie treffende Sensor oder die auf eine Wand (3) der Karosserie treffende Antenne eine T-Verbindung (1) ausbildet, welche die Wand (3), den Sensor oder die Antenne als Strömungshindernis (6) und eine Hauptströmungsrichtung (5) aufweist, wobei die Wand (3) konfiguriert ist, um eine Strömung mit der Hauptströmungsrichtung (5) zu begrenzen,
- wobei die T-Verbindung (1) eine dem Strömungshindernis (6) benachbarte Konkavität (7) der Wand (3) aufweist, wobei die Konkavität (7) zur passiven Widerstandsreduktion unter Unterschallströmungsbedingungen dient,
- wobei die Konkavität (7) in der Hauptströmungsrichtung (5) in einem ersten Abstand (11) stromab von dem Strömungshindernis (6) endet,
- wobei die Konkavität (7) in der Hauptströmungsrichtung (5) in einem zweiten Abstand (9) stromauf von dem Strömungshindernis (6) beginnt und
- wobei die Konkavität (7) bezüglich der Wand (3) außerhalb der Konkavität (7) eine Tiefe aufweist und die Wand (3) mit einer Wandkontur konkaver Form versieht,
**dadurch gekennzeichnet,**
- **dass** der erste Abstand (11) im Bereich vom 20 % bis 80 % einer Länge (10) des Strömungshindernisses (6) in der Hauptströmungsrichtung (5) liegt und dass der zweite Abstand (9) in einem Bereich von 50 % bis 110 % der Länge (10) des Strömungshindernisses (6) in der Hauptströmungsrichtung (5) liegt,
- **dass** sich die Konkavität (7) in mindestens einer Querrichtung (5) zu der Hauptströmungsrichtung (5) von dem Strömungshindernis (6) bis auf einen dritten Abstand (12) erstreckt und
- **dass** der dritte Abstand (12) in einem Bereich von 50 % bis 100 % einer Länge (10) des Strömungshindernisses (6) in der Hauptströmungsrichtung (5) liegt.

5. Flugzeug oder Fahrzeug nach einem der Ansprüche 1 bis 4, **dadurch gekennzeichnet, dass** die Länge (10) des Strömungshindernisses (6) in der Hauptströmungsrichtung (5) der Abstand zwischen den am meisten stromauf und den am meisten stromab liegenden Punkten des Teils des Strömungshindernisses (6) ist, der an der Wand (3) befestigt ist.

6. Flugzeug oder Fahrzeug nach einem der Ansprüche 1 bis 5, **dadurch gekennzeichnet, dass** sich die Konkavität (7) um das gesamte Strömungshindernis (6) herum erstreckt.

7. Flugzeug oder Fahrzeug nach einem der Ansprüche 1 bis 6, **dadurch gekennzeichnet, dass** die Konkavität (7) zwei überlappende Teilkonkavitäten (14) aufweist, die sich beide längs der Hauptströmungsrichtung (5) erstrecken, wobei die Teilkonkavitäten (14) durch einen Grat (15) der Wand (3) innerhalb der Konkavität (7) getrennt sind, wobei sich der Grat längs der Hauptströmungsrichtung (5) erstreckt.

8. Flugzeug oder Fahrzeug nach einem der Ansprüche 1 bis 7, **dadurch gekennzeichnet, dass** ein Umfang (8) der Konkavität (7) rechteckig mit abgerundeten Ecken ist.

9. Flugzeug oder Fahrzeug nach einem der Ansprüche 1 bis 8, **dadurch gekennzeichnet, dass** das Strömungshindernis (6) in der Hauptströmungsrichtung (5) gestreckt ist.

10. Flugzeug oder Fahrzeug nach Anspruch 9, **dadurch gekennzeichnet, dass** eine Länge (10) des Strömungshindernisses (6) in der Hauptströmungsrichtung (5) mindestens zweimal so groß ist wie eine Dicke des Strömungshindernisses (6) quer zu der Hauptströmungsrichtung (5).

11. Verwendung des Flugzeugs oder Fahrzeugs nach einem der Ansprüche 1 bis 10, wobei die Wand (3) die Strömung mit der Hauptströmungsrichtung (5) begrenzt, **dadurch gekennzeichnet, dass** eine maximale Tiefe (13) der Konkavität (7) bezüglich der Wand (3) stromauf und stromab der Konkavität (7) in einem Bereich von 50 % bis 200 % einer Grenzschichtdicke der Strömung über die Wand (3) stromauf des Strömungshindernisses (6) und noch nicht beeinflusst von dem Strömungshindernis (6) liegt.

## Revendications

1. Aéronef, l'aéronef comprenant un fuselage (4) et deux ailes (2) fixées au fuselage (4),
dans lequel chaque aile (2) rencontrant une paroi (3) du fuselage (4) forme une jonction en T (1) comprenant la paroi (3), l'aile (2) sous la forme d'un obstacle d'écoulement (6) et une direction d'écoulement principale (5), la paroi (3) étant configurée pour délimiter un écoulement ayant la direction d'écoulement principale (5),
dans lequel la jonction en T (1) comprend une concavité (7) de la paroi (3) voisine de l'obstacle d'écoulement (6), la concavité (7) servant pour la réduction de traînée passive dans des conditions d'écoulement subsonique,
dans lequel la concavité (7) se termine à une première distance (11) en aval de l'obstacle d'écoulement (6) dans la direction d'écoulement principale (5),
dans lequel la concavité (7) commence à une deuxième distance (9) en amont de l'obstacle d'écoulement (6) dans la direction d'écoulement principale (5), et
dans lequel la concavité (7) a une profondeur par rapport à la paroi (3) à l'extérieur de la concavité (7) et fournit la paroi (3) avec un contour de paroi de forme concave,
**caractérisé** :
**en ce que** la première distance (11) est dans une plage de 20% à 80% d'une longueur (10) de l'obstacle d'écoulement (6) dans la direction d'écoulement principale (5) et en ce que la deuxième distance (9) est dans une plage de 50% à 110% de la longueur (10) de l'obstacle d'écoulement (6) de la direction d'écoulement principale (5),
**en ce que** la concavité (7), dans au moins une direction transversale (5) par rapport à la direction d'écoulement principale (5), s'étend à partir de l'obstacle d'écoulement (6) jusqu'à une troisième distance (12), et
**en ce que** la troisième distance (12) est dans une plage de 50% à 100% d'une longueur (10) de l'obstacle d'écoulement (6) dans la direction d'écoulement principale (5).

2. Aéronef, facultativement selon la revendication 1, l'aéronef comprenant un mât d'accrochage de moteur fixé à une aile (2) ou à un fuselage (4) de l'aéronef,
dans lequel le mât d'accrochage de moteur rencontrant une paroi (3) du fuselage (4) ou de l'aile (2) forme une jonction en T (1) comprenant la paroi (3), le mât d'accrochage de moteur en tant qu'obstacle d'écoulement (6) et une direction d'écoulement principale (5), la paroi (3) étant configurée pour délimiter un écoulement ayant la direction d'écoulement principale (5),
dans lequel la jonction en T comprend une concavité (7) de la paroi (3) voisine de l'obstacle d'écoulement (6), la concavité (7) servant le réduction de traînée passive dans des conditions d'écoulement subsonique,
dans lequel la concavité (7) se termine à une première distance (11) en aval de l'obstacle d'écoulement (6) dans la direction d'écoulement principale (5),
dans lequel la concavité (7) commence à une deuxième distance (9) en amont de l'obstacle d'écoulement (6) dans la direction d'écoulement principale (5), et
dans lequel la concavité (7) a une profondeur par rapport à la paroi (3) à l'extérieur de la concavité (7) et fournit la paroi (3) avec un contour de paroi de forme concave,
**caractérisé** :
**en ce que** la première distance (11) est dans une plage de 20% à 80% d'une longueur (10) de l'obstacle d'écoulement (6) dans la direction d'écoulement principale (5) et en ce que la deuxième distance (9) est dans une plage de 50% à 110% de la longueur (10) de l'obstacle d'écoulement (6) dans la direction d'écoulement principale (5),
**en ce que** la concavité (7), dans au moins une direction transversale (5) par rapport à la direction d'écoulement principale (5), s'étend à partir de l'obstacle d'écoulement (6) jusqu'à une troisième distance (12), et
**en ce que** la troisième distance (12) est dans une plage de 50% à 100% d'une longueur (10) de l'obstacle d'écoulement (6) dans la direction d'écoulement principale (5).

3. Aéronef facultativement selon la revendication 1 ou 2, l'aéronef comprenant un capteur ou une antenne fixé(e) à une aile (2) ou à un fuselage (4) de l'aéronef,
dans lequel le capteur ou l'antenne rencontrant une paroi (3) du fuselage (4) ou de l'aile (2) forme une jonction en T (1) comprenant la paroi (3), le capteur ou l'antenne en tant qu'obstacle d'écoulement (6), et une direction d'écoulement principale (5), la paroi (3) étant configurée pour délimiter un écoulement ayant la direction d'écoulement principale (5),
dans lequel la jonction en T (1) comprend une concavité (7) de la paroi (3) voisine de l'obstacle d'écoulement (6), la concavité (7) servant de réduction de traînée passive dans des conditions d'écoulement subsonique,
dans lequel la concavité (7) se termine à une première distance (11) en aval de l'obstacle d'écoulement (6) dans la direction d'écoulement principale (5),
dans lequel la concavité (7) commence à une seconde distance (9) en amont de l'obstacle d'écoulement (6) dans la direction d'écoulement principale (5), et
dans lequel la concavité (7) a une profondeur par rapport à la paroi (3) à l'extérieur de la concavité (7) et dote la paroi (3) d'un contour de paroi de forme concave,
**caractérisé** :
**en ce que** la première distance (11) est dans une plage de 20% à 80% d'une longueur (10) de l'obstacle d'écoulement (6) dans la direction d'écoulement principale (5) et en ce que la deuxième distance (9) est dans une plage de 50% à 110% de la longueur (10) de l'obstacle d'écoulement (6) dans la direction d'écoulement principale (5),
**en ce que** la concavité (7), dans au moins une direction transversale (5) par rapport à la direction d'écoulement principale (5), s'étend de l'obstacle d'écoulement (6) jusqu'à une troisième distance (12), et
**en ce que** la troisième distance (12) est dans une plage de 50% à 100% d'une longueur (10) de l'obstacle d'écoulement (6) dans la direction principale d'écoulement (5).

4. Véhicule, le véhicule comprenant un capteur ou une antenne fixé(e) sur un corps du véhicule - dans lequel le capteur ou l'antenne rencontrant une paroi (3) du corps forme une jonction en T (1) comprenant la paroi (3), le capteur ou l'antenne en tant qu'obstacle d'écoulement (6), et une direction d'écoulement principale (5), la paroi (3) étant configurée pour délimiter un écoulement ayant la direction d'écoulement principale (5),
dans lequel la jonction en T (1) comprend une concavité (7) de la paroi (3) voisine de l'obstacle d'écoulement (6), la concavité (7) servant de réduction de traînée passive dans des conditions d'écoulement subsonique,
dans lequel la concavité (7) se termine à une première distance (11) en aval de l'obstacle d'écoulement (6) dans la direction d'écoulement principale (5),
dans lequel la concavité (7) commence à une deuxième distance (9) en amont de l'obstacle d'écoulement (6) dans la direction d'écoulement principale (5), et
dans lequel la concavité (7) a une profondeur par rapport à la paroi (3) à l'extérieur de la concavité (7) et dote la paroi (3) d'un contour de paroi de forme concave,
**caractérisé** :
**en ce que** la première distance (11) est dans une plage de 20% à 80% d'une longueur (10) de l'obstacle d'écoulement (6) dans la direction d'écoulement principale (5) et en ce que la deuxième distance (9) est dans une plage de 50% à 110% de la longueur (10) de l'obstacle d'écoulement (6) dans la direction d'écoulement principale (5),
**en ce que** la concavité (7), dans au moins une direction transversale (5) par rapport à la direction d'écoulement principale (5), s'étend de l'obstacle d'écoulement (6) jusqu'à une troisième distance (12), et
**en ce que** la troisième distance (12) est dans une plage de 50% à 100% d'une longueur (10) de l'obstacle d'écoulement (6) dans la direction d'écoulement principale (5).

5. Aéronef ou véhicule selon l'une quelconque des revendications 1 à 4, **caractérisé en ce que** la longueur (10) de l'obstacle d'écoulement (6) dans la direction d'écoulement principale (5) est cette distance entre les points le plus en amont et le plus en aval de cette partie de l'obstacle d'écoulement (6) qui est fixée sur la paroi (3).

6. Aéronef ou véhicule selon l'une quelconque des revendications 1 à 5, **caractérisé en ce que** la concavité (7) s'étend tout autour de l'obstacle d'écoulement (6).

7. Aéronef ou véhicule selon l'une quelconque des revendications 1 à 6, **caractérisé en ce que** la concavité (7) comprend deux concavités partielles (14) qui se chevauchent, s'étendant toutes deux le long de la direction d'écoulement principale (5), les concavités partielles (14) étant séparées par une crête (15) de la paroi (3) à l'intérieur de la concavité (7), la crête s'étendant le long de la direction d'écoulement principale (5).

8. Aéronef ou véhicule selon l'une quelconque des revendications 1 à 7, **caractérisé en ce qu'**une circonférence (8) de la concavité (7) est un rectangle avec des bords arrondis.

9. Aéronef ou véhicule selon l'une quelconque des revendications 1 à 8, **caractérisé en ce que** l'obstacle d'écoulement (6) est allongé dans la direction d'écoulement principale (5).

10. Aéronef ou véhicule selon la revendication 9, **caractérisé en ce qu'**une longueur (10) de l'obstacle d'écoulement (6) dans la direction d'écoulement principale (5) représente au moins deux fois une épaisseur de l'obstacle d'écoulement (6) transversal par rapport à la direction d'écoulement principale (5).

11. Utilisation de l'aéronef ou du véhicule selon l'une quelconque des revendications 1 à 10, dans laquelle la paroi (3) délimite un écoulement ayant la direction d'écoulement principale (5), **caractérisé en ce qu'**une profondeur maximum (13) de la concavité (7) par rapport à la paroi (3) en amont et en aval de la concavité (7), est dans une plage de 50% à 200% d'une épaisseur de couche de limite de l'écoulement sur la paroi (3) en amont de l'obstacle d'écoulement (6) et pas encore affecté par l'obstacle d'écoulement (6).
